# EUROPÄISCHE PATENTANMELDUNG

(11) **EP 2 799 241 A2**
(43) Veröffentlichungstag der Anmeldung: **05.11.2014**
(21) Anmeldenummer: 14158763.4
(22) Anmeldetag: 11.03.2014
(51) Int. Cl.: B41M 1/30, B41M 5/00

(54) **Direktdruckverfahren mit Unterschicht**

(30) Priorität: 29.04.2013 DE 102013207809
(71) Anmelder: Krones AG, 93073 Neutraubling (DE); Heidelberger Druckmaschinen AG, 69115 Heidelberg (DE)
(72) Erfinder: Weigert, Johann, 76698 Ubstadt-Weiher (DE); Sonnauer, Andreas, 93073 Neutraubling (DE); Lauterbach, Florian, 93073 Neutraubling (DE); Rrahimi, Migjen, 8623 Wetzikon (CH)
(74) Vertreter: Grünecker, Kinkeldey, Stockmair & Schwanhäusser

(57) **Zusammenfassung**

Die Erfindung betrifft ein Verfahren und eine Vorrichtung zum Direktbedrucken von Kunststoffbehältern, wobei in einem ersten Schritt eine Zwischenschicht mit Hilfe einer ersten Vorrichtung auf den zu bedruckenden Behälter aufgebracht wird und in einem zweiten Schritt der Behälter in bestimmten Bereichen mit Hilfe einer zweiten Vorrichtung bedruckt wird, dadurch gekennzeichnet, dass die Zwischenschicht eine Verbindung mit dem Behälter und der Druckschicht eingeht, die unlöslich in wässrigen Lösungen mit einem pH-Wert zwischen 3 und 10 und gut löslich in wässrigen Lösungen mit einem pH-Wert in einem Bereich kleiner als 3 und/oder größer als 10 ist; und ein Recyclingverfahren für einen mit einer Zwischenschicht versehenen Kunststoffbehälter.

## Beschreibung

Die Erfindung betrifft ein Direktdruckverfahren und eine entsprechende Druckmaschine zum Bedrucken von Behältern insbesondere PET-Behältern und ein entsprechendes Recyclingverfahren.

### Stand der Technik

Aus dem Stand der Technik sind viele Möglichkeiten zum Direktbeducken von Kunststoffbehältern bekannt. Dabei wird Druckfarbe auf die Wandungen von Behältern in mindestens einer Schicht aufgebracht.

Die DE 102010044243 A1 schlägt darüber hinaus das Versehen der äußeren Schicht des Behälters mit einer Zwischenschicht vor, um dadurch die Haftfestigkeit und andere Eigenschaften der Druckschicht, die auf diese Zwischenschicht aufgebracht wird, zu verbessern.

### Aufgabe

Es ist die Aufgabe der vorliegenden Erfindung ein Direktdruckverfahren bereit zu stellen, was die Recyclingeigenschaften von bedruckten Kunststoffbehältern insbesondere PET-Behältern verbessert und weiterhin ein Recyclingverfahren für entsprechende Behälter bereit zu stellen.

### Lösung

Dieses Problem wird durch das Direktdruckverfahren nach Anspruch 1 und die Direktdruckmaschine nach Anspruch 9 gelöst. Die Unteransprüche beinhalten zweckmäßige Ausgestaltungen der Erfindung.

Das erfindungsgemäße Direktdruckverfahren ist dadurch gekennzeichnet, dass die aufgebrachte Zwischenschicht eine Verbindung mit dem Behälter und der Druckschicht eingeht, die unlöslich in wässrigen Lösungen mit einem pH-Wert zwischen 3 und 10 ist, und gut löslich in wässrigen Lösungen mit einem pH-Wert in einem Bereich größer als 10 ist. Durch das Vorsehen einer Zwischenschicht, die in einem Bereich der während der Gebrauchsdauer üblichen pH-Werte zwischen 3 und 10 nicht löslich ist, jedoch in einer wässrigen Lösung mit einem pH-Wert in einem Bereich größer als 10 und/oder kleiner als 3 löslich ist, wird ein Ablösen der Zwischenschicht und der darauf aufgebrachten Druckschicht während bekannten Recyclingprozessen, die zumindest teilweise in einem basischen Milieu stattfinden, vereinfacht. Löst sich in dieser basischen Lösung die Zwischenschicht, so nimmt diese in vorteilhafter Weise auch die darauf aufgebrachte Druckschicht von der Behälterwand mit. Dadurch wird eine Trennung des Kunststoffs von der Druckerfarbe und der Zwischenschicht erreicht.

In einer Ausführungsform wird die Zwischenschicht nur in bestimmten Bereichen auf die Behälter aufgebracht. Dadurch kann zum einem der Rohstoff, der für die Zwischenschicht verwendet wird, eingespart werden, was insbesondere eine umweltfreundliche und ökonomischere Herstellung der bedruckten Behälter ermöglicht und zum anderen wird gewährleistet, dass die ebenfalls in diesem bestimmten Bereichen aufgebrachte Druckschicht im Recyclingprozess effektiv vom Behälter gelöst werden kann.

In einer Ausführungsform ist das Direktdruckverfahren dadurch gekennzeichnet, dass die Zwischenschicht mit Hilfe einer Walzvorrichtung oder einer Sprühvorrichtung oder einer Dipp-Vorrichtung oder einer Direktdruckvorrichtung oder einer Plasmabeschichtungsvorrichtung oder einer Flammenpyrolysevorrichtung (beispielsweise durch Aufbringen einer *SiOₓ*-Schicht) auf dem Behälter aufgebracht wird. Abhängig von der mit der Zwischenschicht zu versehenen Fläche auf dem Behälter und den beabsichtigten Eigenschaften der Zwischenschicht kann die Verwendung einer dieser Vorrichtungen oder einer Kombination davon vorteilhaft sein.

In einer weiteren Ausführungsform ist das Material, aus dem die Zwischenschicht besteht, ein laugenlösliches Polymer oder es umfasst dieses und/oder die Zwischenschicht Teflonpartikel enthält, deren Größe zwischen 1µm und 100µm, bevorzugt zwischen 8µm und 15µm beträgt. Da Polymere vielfältige chemische Eigenschaften aufweisen und insbesondere in großen Mengen herstellbar sind und darüber hinaus auch in der Nahrungsmittelindustrie für Verpackungen verwendet werden können, stellt diese Stoffgruppe ein besonders geeignetes Material zur Bildung der Zwischenschicht dar. Durch die Verwendung von Teflonpartikeln kann die Haftung und die Beständigkeit gegenüber wässrigen Lösungen mit einem pH-Wert zwischen 3 und 10 verbessert werden.

In einer Ausführungsform ist das Direktdruckverfahren dadurch gekennzeichnet, dass das Material aus dem die Zwischenschicht besteht, auf Bestrahlung mit Licht einer bestimmten Wellenlänge mit Veränderung wenigstens einer der Eigenschaften Haftfestigkeit, Farbe, Barriereneigenschaften, Migrationseigenschaften, Spreitungseigenschaften reagiert und wobei der Behälter mit Hilfe einer in Transportrichtung nach der ersten Vorrichtung und vor der zweiten Vorrichtung angeordneten Lichtquelle mit Licht dieser bestimmten Wellenlänge bestrahlt wird. Durch die Veränderung bestimmter Eigenschaften der Zwischenschicht können bestimmte Eigenschaften des bedruckten Behälters erreicht werden. So ist bekannt, dass durch Bestrahlung mit entsprechendem Licht manche Stoffe ihr Farbverhalten bzw. ihre Barriereneigenschaften und Migrationseigenschaften für das Eindringen von Stoffen, wie Sauerstoff oder Kohlendioxid, verändern. Sind hier spezielle Anforderungen an die Zwischenschicht gestellt, so kann diese entsprechend durch Bestrahlung angepasst werden. Wird hierzu ein Wellenlängenbereich verwendet, der für das Material aus dem der Behälter besteht, ungefährlich ist, das bedeutet, dass durch Bestrahlung des Behälters mit Licht dieser Wellenlänge keine Veränderungen in dem Behälter auftreten, ist dies besonders von Vorteil, da so nur die Eigenschaften der Zwischenschicht verändert werden.

In einer weiteren Ausführungsform wird die Zwischenschicht derart auf den Behälter aufgebracht, dass die resultierende Rauhigkeit der Oberfläche des Behälters in bestimmten Bereichen erhöht oder verringert wird oder dass Muster in dem bestimmten Bereichen erzeugt werden. Auch hierdurch können bestimmte Eigenschaften des fertig gestellten Kunststoffbehälters wie beispielsweise eine gewünschte Lichtreflexion oder bestimmte Oberflächeneigenschaften gezielt durch die Zwischenschicht beeinflusst werden.

In einer weiteren Ausführungsform ist die Schmelztemperatur des Materials, aus dem die Zwischenschicht besteht, 70° Celsius oder mehr und/oder die Oberflächenenergie des mit der Zwischenschicht beschichteten Kunststoffbehälters beträgt zwischen 30mN/m und 60mN/m, bevorzugt zwischen 38mN/m und 46mN/m. Dadurch wird eine Festigkeit der Zwischenschicht und dadurch der Bedruckung auch bei im Vergleich zum täglichen Gebrauch hohen Temperaturen gewährleistet, allerdings ermöglicht das Vorsehen einer Zwischenschicht mit einer Schmelztemperatur, die um 70° oder geringfügig höher liegt, ebenfalls ein effektives Entfernen der Zwischenschicht während des Recyclingprozesses. Die Einstellung der Oberflächenenergie durch die Zwischenschicht kann die Aufnahmefähigkeit von Tinten verbessern.

In einer Ausführungsform ist das Direktdruckverfahren dadurch gekennzeichnet, dass die Zwischenschicht unlöslich in wässrigen Tensidlösungen sowie in Ethanol und Isopropanol ist. Dadurch wird erreicht, dass die bedruckten Behälter beispielsweise auch gewaschen werden können oder bei Verwendung in speziellen Bereichen beispielsweise im Labor auch entsprechend gereinigt werden können.

Weiterhin kann das Direktdruckverfahren dadurch gekennzeichnet sein, dass die Viskosität eines Stoffgemisches aus dem die Zwischenschicht besteht zwischen 2mPas und 600mPas beträgt.

Es kann eine Direktdruckmaschine vorgesehen werden, die zum Bedrucken von Behältern wie Flaschen geeignet ist, wobei diese Direktdruckmaschine eine Transportvorrichtung zum Befördern der Behälter durch die Druckmaschine entlang einer Transportrichtung, eine erste Vorrichtung zum Aufbringen einer Zwischenschicht und eine zweite Vorrichtung zum Bedrucken von bestimmten Bereichen der Behälter mit einer Druckschicht umfasst, wobei die Direktdruckmaschine dadurch gekennzeichnet ist, dass sie ein Direktdruckverfahren entsprechend der oben beschriebenen Ausführungsformen durchführen kann. Entsprechende Druckmaschinen können als Linearläufer, aber auch als Rundläufer ausgebildet sein.

In einer Ausrührungsform ist die Direktdruckmaschine dadurch gekennzeichnet, dass die erste Vorrichtung eine Walzvorrichtung oder eine Sprühvorrichtung oder eine Dipp-Vorrichtung oder eine Direktdruckvorrichtung oder eine Plasmabeschichtungsvorrichtung oder eine Flammenpyrolysevorrichtung umfasst, die die Zwischenschicht aufbringen können. Dadurch können bereits beim Aufbringen der Zwischenschicht bestimmt Bedingungen, die die Zwischenschicht erfüllen soll und/oder an das Herstellungsverfahren gestellt werden, erfüllt werden.

In einer Ausführungsform ist das Material aus dem die Zwischenschicht besteht ein laugenlösliches Polymer oder umfasst dieses und/oder die Zwischenschicht Teflonpartikel enthält, deren Größe zwischen 1µm und 100µm, bevorzugt zwischen 8µm und 15µm beträgt. Da dieses Material in großen Mengen hergestellt werden kann und Polymere gezielt manipuliert werden können, um bestimmte Eigenschaften aufzuweisen, ist der Einsatz dieses Materials in der Direktdruckmaschine von Vorteil. Teflonpartikel erhöhen die Haftung der Zwischenschicht am Behälter und können die Beständigkeit gegenüber wässrigen Lösungen mit pH-Werten zwischen 3 und 10 verbessern.

In einer weiteren Ausrührungsform ist die Direktdruckmaschine dadurch gekennzeichnet, dass sie eine Lichtquelle in Transportrichtung nach der ersten Vorrichtung und vor der zweiten Vorrichtung umfasst, wobei die Lichtquelle in einem bestimmten Wellenlängenbereich Licht emittieren kann und wobei das Material, aus dem die Zwischenschicht besteht, auf eine Bestrahlung mit Licht in diesem bestimmten Wellenlängenbereich reagiert. Dadurch können durch gezielten Energieeintrag auf die Zwischenschicht bestimmte chemische Eigenschaften und physikalische Eigenschaften, wie beispielsweise die Rauhigkeit, die Farbe oder das Reflexionsverhalten manipuliert werden. Wird hierzu ein Wellenlängenbereich verwendet, der für das Material aus dem der Behälter besteht, ungefährlich ist, das bedeutet, dass durch Bestrahlung des Behälters mit Licht dieser Wellenlänge keine Veränderungen in dem Behälter auftreten, ist dies besonders von Vorteil, da so nur die Eigenschaften der Zwischenschicht verändert werden.

Ebenfalls vorgesehen ist ein Recyclingverfahren für Kunststoffbehälter, insbesondere PET-Behälter, mit einer Zwischenschicht, die mit dem Kunststoffbehälter und einer Druckschicht verbunden ist, wobei die Zwischenschicht unlöslich in wässrigen Lösungen mit einem pH-Wert zwischen 3 und 10 und gut löslich in wässrigen Lösungen mit einem pH-Wert in einem Bereich größer als 10 ist, wobei das Recyclingverfahren dadurch gekennzeichnet ist, dass der Kunststoffbehälter zerkleinert wird und eine Ablösung der Kunststoffschicht vom zerkleinerten Kunststoffbehälter mittels nukleophiler Substitution erfolgt. So wird eine möglichst rückstandslose Ablösung der Zwischenschicht und der damit verbundenen Druckschicht erreicht.

In einer Ausführungsform erfolgt die Ablösung der Kunststoffschicht in einer Recyclinglösung mit einem pH-Wert größer als 10, wobei die Recycling-Lösung NaOH enthält.

### Kurze Beschreibung der Figuren

- Fig. 1:: Schematische Darstellung einer erfindungsgemäßen Direktdruckmaschine
- Fig. 2:: Schematische Darstellung des Prozessablaufs beim Aufbringen der Zwischenschicht und der Druckschicht
- Fig. 3:: Schematische Darstellung der chemischen Bindung der Zwischenschicht und des PET-Behälters gemäß einer Ausführungsform
- Fig. 4:: Schematische Darstellung bestimmter Realisierungen der Druckschicht und der Zwischenschicht

### Detaillierte Beschreibung

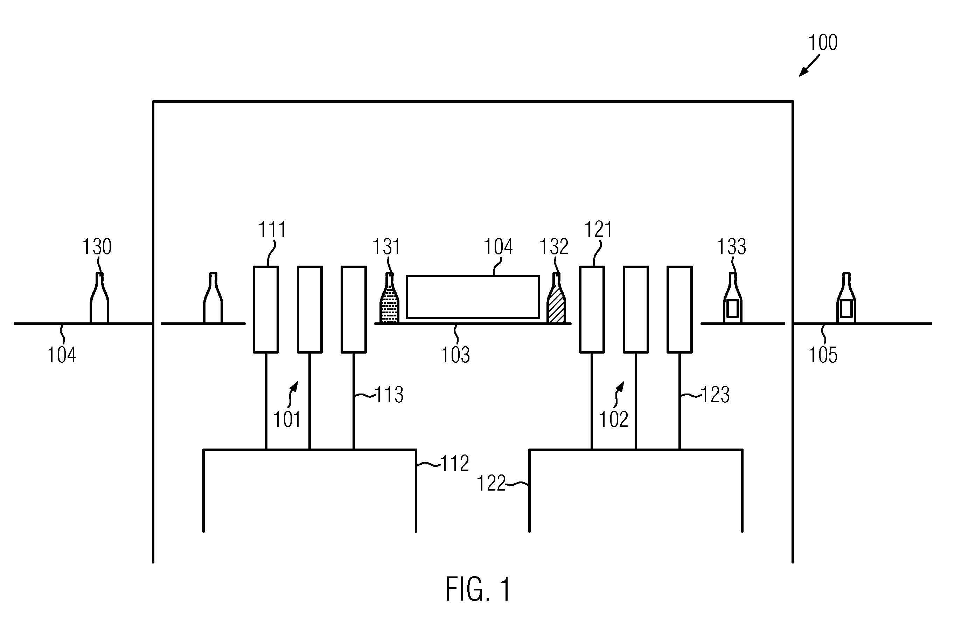

Fig. 1 zeigt eine erfindungsgemäße Direktdruckmaschine 100 zum Bedrucken von Behältern insbesondere Kunststoffbehältern wie beispielsweise PET-Behältern und PET-Flaschen. Diese Direktdruckmaschine 100 umfasst dabei einen Zuförderer 104, der nicht bedruckte Flaschen bzw. Behälter 130, der Direktdruckmaschine 100 zuführen kann. Dabei kann es sich um einen Linearförderer oder einen Sternförderer handeln. Im Bereich der Maschine, der hier durch das Rechteck gekennzeichnet ist (dies dient hier mehr der Illustration einer Separation der Direktdruckmaschine 100 und muss sich nicht in Form von tatsächlichen Bauteilen, wie beispielsweise einer Verkleidung manifestieren), sind eine erste Vorrichtung 101 und eine zweite Vorrichtung 102 vorgesehen. Die erste Vorrichtung 101 ist dazu geeignet eine Zwischenschicht auf die Behälter 120 aufzubringen. Dazu sind spezielle Druckköpfe bzw. Druckvorrichtungen 111 vorgesehen. Dabei kann es sich beispielsweise um Vorrichtungen handeln, die gemäß dem Ink-Jet-Verfahren eine Zwischenschicht auf die Behälter 130 aufbringen können. Es kann sich dabei insbesondere um Walzvorrichtungen oder Sprühvorrichtungen handeln. Es können aber auch Dipp-Vorrichtungen oder eine aus dem Stand der Technik hinreichend bekannte Direktdruckvorrichtung oder eine Plasmabeschichtungsvorrichtung oder eine Flammenpyrolysevorrichtung verwendet werden. Wird eine Plasmabeschichtungsvorrichtung verwendet, ist vorgesehen, dass die erste Vorrichtung 101 vorzugsweise eine Vakuumkammer umfasst, in die die Behälter 130 eingebracht werden können und in der ein entsprechendes Plasma erzeugt werden kann, was die Beschichtung der Behälter 130 erzeugt. Alternativ kann auch ein Atmosphärenplasma verwendet werden. Zusätzlich zu einem dabei verwendeten Versorgungsgas, beispielsweise Sauerstoff, Luft, Stickstoff oder Kohlendioxid, können Precursor, wie Amid, Amin, Imid und Silan verwendet werden. Diese Stoffe bzw. Substanzen können auch bei pyrolytischen Verfahren Anwendung finden, wie beispielsweise der Flammenpyrolyse. Weiterhin kann die erste Vorrichtung 101 neben den Druckmodulen 111 Vorrichtungen umfassen, die das Aufbringen der Zwischenschicht auf nur bestimmte Bereiche des Behälters 130 gewährleisten. Dazu können entweder entsprechende Druckvorrichtungen, wie sie aus dem Stand der Technik für das Bedrucken von Behältern bekannt sind, in nur ausgewählten Bereichen der Behälter verwendet werden oder aber spezielle Schutzvorrichtungen für die Bereiche der Behälter 130, die nicht bedruckt werden sollen. Werden Vorrichtungen verwendet, die bereits aus dem Stand der Technik bekannt sind, so müssen diese dazu geeignet sein, nicht nur das entsprechende Druckverfahren für die Zwischenschicht durchführen zu können, sondern auch eine Weiterleitung und eine Verteilung des Materials aus dem die Zwischenschicht besteht ermöglichen. Dabei sind insbesondere Vorrichtungen und Leitungen geeignet, die in Lösung befindliche Polymergemische befördern können, ohne an Leistungsfähigkeit zu verlieren.

Weiterhin umfasst die erste Vorrichtung 101 einen Vorlagebehälter 112, in dem das Material, aus dem die Zwischenschicht besteht, vorgehalten wird. Das eine oder die mehreren Module 111 sind dabei über Leitungen 113 mit dem Vorlagebehälter 112 verbunden. Besteht die Zwischenschicht aus mehreren Bestandteilen, die gleichzeitig aufgebracht werden oder ist beabsichtigt, dass mehr als eine Zwischenschicht aufgebracht wird, wobei jede Zwischenschicht beispielsweise spezielle chemische und physikalische Eigenschaften aufweisen kann, ist der Vorlagebehälter 112 bevorzugt entweder als mehrere separate Vorlagebehälter ausgestaltet oder in entsprechende Kammern unterteilt, so dass die Materialien, die für die verschiedenen Schichten der Zwischenschicht verwendet werden können, nicht vermischt werden.

Die mit der Zwischenschicht versehenen Behälter 131 werden dann über einen Förderer 103 weitergeleitet. Nachfolgend der ersten Vorrichtung 101 kann hier eine Bestrahlungseinheit 104 vorgesehen sein, die den mit der Zwischenschicht versehenen Behälter 131 bestrahlen kann. Die Bestrahlungseinheit 104 kann auch als Trocknungseinheit ausgebildet sein und insbesondere eine Wärmestrahlungsquelle sein, die ein gezieltes Trocknen der Zwischenschicht oder eine Reduzierung des Wasser- oder Lösemittelgehalts in der Zwischenschicht ermöglicht. Damit kann die Unterschicht auf das Überdrucken vorbereitet werden. Durch eine Bestrahlung vorzugsweise mit Licht einer speziell ausgewählten Wellenlänge kann die Zwischenschicht auf dem mit dieser versehenen Behälter 131 gezielt hinsichtlich ihrer chemischen oder physikalischen Eigenschaften verändert werden. So kann beispielsweise die Rauhigkeit der Zwischenschicht oder ihre Oberflächenenergie verändert werden, so dass eine bessere Haftung der in der darauf folgenden zweiten Vorrichtung 102 aufgebrachten Druckschicht erreicht wird. Eine entsprechende Bestrahlungsvorrichtung kann auch vor der ersten Vorrichtung 101 angeordnet sein, um die Oberfläche des unbeschichteten Behälters 130 zu aktivieren, so dass beispielsweise eine bessere Haftung der Zwischenschicht, die in der ersten Vorrichtung 101 aufgebracht wird, erreicht wird.

Nach Verlassen der Bestrahlungseinheit 104 bzw. nach Verlassen der ersten Vorrichtung 101, sofern keine weitere Bestrahlung vorgesehen ist, werden die (bestrahlten und) mit der Zwischenschicht versehenen Behälter 132 zur zweiten Vorrichtung 102 geleitet. Bei dieser Vorrichtung handelt es sich um eine aus dem Stand der Technik bereits bekannte Druck- bzw. Direktdruckmaschine, die eine Druckschicht mit Hilfe von Druckmodulen 121 auf den Behälter 132 aufbringt. Dazu umfasst die zweite Vorrichtung 102 vorzugsweise mehrere Druckmodule 121, obwohl hier ebenfalls nur ein Druckmodul 121 vorgesehen sein kann. Ebenfalls ist ein Vorlagebehälter 122 der zweiten Vorrichtung 102 zugeordnet und über entsprechende Zuleitungen 123 mit den Druckmodulen 121 verbunden. Kommen unterschiedliche Farben beim Drucken zum Einsatz oder unterschiedliche Materialien, so kann dieser Vorlagebehälter analog zum Vorlagebehälter 112 ausgebildet sein. Nachdem die Bedruckung mit der Druckschicht in der zweiten Vorrichtung 102 abgeschlossen ist, kann der bedruckte Behälter 133 über einen weiteren Förderer 105 weitergeleitet werden. Hier können sich weitere Prozessschritte anschließen, insbesondere auch eine weitere Bestrahlung des bedruckten Behälters 133. Die erste Vorrichtung 101 und die zweite Vorrichtung 102 können analog zu üblichen Druckmaschinen auch als Rundläufer ausgebildet sein, und nicht wie hier dargestellt als lineare Druckmaschinen.

Ungeachtet der hier beschriebenen spezifischen Ausführung der Druckmaschine bzw. Direktdruckmaschine 100 sei erwähnt, dass diese grundsätzlich als Linearläufer oder als Rundläufer ausgebildet sein kann.

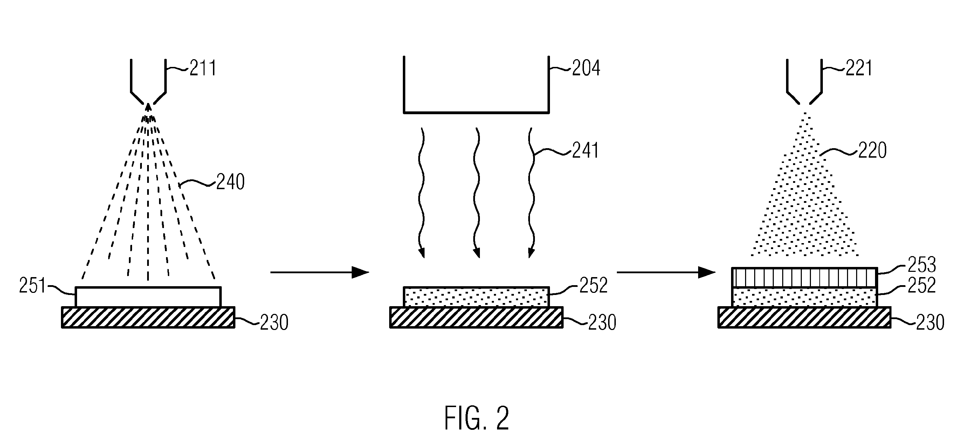

Fig. 2 zeigt eine vereinfachte Darstellung eines Aufbringungsverfahrens.

In einem ersten Schritt wird auf den Behälter 230 die Zwischenschicht 251 aufgebracht. Das kann in einer besonders bevorzugten Ausführungsform mit Hilfe eines Ink-Jet-Verfahrens, in dem nur Bereiche mit der Zwischenschicht 251 versehen werden, die später von einer Druckschicht belegt werden sollen, durchgeführt werden. Dazu wird mit wenigstens einem der entsprechenden Module 211, die in Figur 1 näher erläutert wurden, beispielsweise mit Hilfe eines Drop on Demand-Verfahrens, die Zwischenschicht 251 aufgebracht. Es sei erwähnt, dass durch das Aufbringen der Zwischenschicht 251 auch die Oberflächenenergie des so beschichteten Behälters beeinflusst werden kann. So kann eine Zwischenschicht 251 derart aufgebracht werden, dass die Oberflächenenergie zwischen 30 mN/m und 60mN/m liegt. Besonders bevorzugt beträgt die Oberflächenenergie dabei zwischen 38 mN/m und 46mN/m. Da die Oberflächenenergie des beschichteten Kunststoffbehälters 230 Einfluss auf die Verteilung aufgebrachter Druckfarbe oder Tinten hat, gestattet dies eine gezielte Beeinflussung der Verteilung der auf die Zwischenschicht 251 aufgebrachten Tinten. Abhängig von der Oberflächenenergie des beschichteten Kunststoffbehälters und der Grenzflächenenergie zwischen aufzubringender Tinte und dem beschichteten Kunststoffbehälter 230, sowie der Oberflächenspannung beispielsweise eines Tropfens der Tinte kann so genau festgelegt werden, ob die Tinte sich großflächig auf der Oberfläche des mit der Zwischenschicht 251 beschichteten Kunststoffbehälters 230 verteilt oder eine punktförmige Konzentration von Tintentropfen stattfindet.

Nachdem die Zwischenschicht 251 auf dem Behälter aufgebracht wurde kann optional eine Bestrahlung mit Hilfe einer Bestrahlungseinheit 204 erfolgen. Diese sendet bevorzugt Wellenlicht in einem bestimmten Wellenlängenbereich oder eine bestimmten Wellenlänge 241 aus und bestrahlt damit den Behälter 230 und insbesondere die Zwischenschicht 252. Abhängig von der Wellenlänge des Lichts 241 und dem Material aus dem die Zwischenschicht 252 besteht, kann die ganze Zwischenschicht oder bestimmte Bestandteile dieser Zwischenschicht chemisch und physikalisch verändert werden. Insbesondere kann die Zwischenschicht aktiviert werden, wodurch beispielsweise die Oberflächenenergie erhöht wird, was das darauf folgende Aufbringen der Druckschicht erleichtert bzw. die Verbindung zwischen der Druckschicht und der Zwischenschicht verbessern kann. Auch ist es denkbar mit Hilfe der Bestrahlung Bestandteile in der Zwischenschicht 252 gezielt zu aktivieren, so dass beispielsweise ein Farbwechsel stattfindet.

In einem weiteren Verfahrensschritt wird der Behälter 230 mit der darauf befindlichen Zwischenschicht 252 mit einer Druckschicht 253 versehen. Dazu wird auch bevorzugt in einem Ink Jet-Verfahren, wobei hier auch jedes andere geeignete Druckverfahren zum Einsatz kommen kann, das insbesondere in der Verpackungsmittelindustrie zum Einsatz kommt, aus einem der Druckmodule 221 die entsprechende Farbe bzw. das entsprechende Farbgemisch auf die Zwischenschicht 252 aufgebracht.

Es sei hier erwähnt, dass sowohl die Zwischenschicht 252 als auch die Druckschicht 253 aus mehreren Schichten bestehen kann. So kann während des ersten in Figur 2 dargestellten Verfahrensschritts, bei dem die Zwischenschicht 251 auf die Behälteroberfläche 230 aufgebracht wird auch vorgesehen sein, dass mehrere Module 211 nacheinander angeordnet sind und jedes der Module unterschiedliche Materialien auf die Behälterwand 230 aufträgt. Diese können übereinander, also in Form einer mehrlagigen Zwischenschicht 251 vorgesehen sein. Es kann jedoch auch vorgesehen sein, dass unterschiedliche Materialien für unterschiedliche Zwischenschichten in nur bestimmten Bereichen der Behälterwand 230 angeordnet werden. So kann beispielsweise vorgesehen sein, dass eine Zwischenschicht 251 in den Bereichen auf die Behälterwand 230 aufgebracht wird, in denen im folgenden Verfahrensschritt die Druckschicht 253 aufgetragen wird. Außerdem kann vorgesehen sein, dass in anderen Bereichen, in denen die Druckschicht 253 nicht aufgebracht wird, ebenfalls eine Zwischenschicht auf die Behälterwand 230 aufgebracht wird. Diese kann sich in ihren Eigenschaften von der ersten aufgebrachten Zwischenschicht 251 unterscheiden. So kann beispielsweise bei dieser Zwischenschicht vorgesehen sein, dass sie insbesondere Migrationseigenschaften von zusätzlich verwendeten Stoffen oder die Barriereeigenschaften gegenüber einem Eindringen oder Austreten von *CO₂* und Sauerstoff beeinflusst. Weiterhin kann auch vorgesehen sein, dass alle verwendeten Zwischenschichten einen Satz an gleichen Eigenschaften aufweisen, sich aber bezüglich anderer Eigenschaften (beispielsweise Reflektionsverhalten, Farbgebung, Rauhigkeit und Festigkeit) unterscheiden. So kann vorgesehen sein, dass entweder in der mehrlagigen Zwischenschicht oder in den mehreren verwendeten Zwischenschichten, die in unterschiedlichen Bereichen aufgebracht sind, eine Zwischenschicht enthalten ist, die so ausgestaltet ist, dass sie von der Behälteroberfläche abgekratzt werden kann, wohingegen die Haftfestigkeit der anderen Zwischenschichten besonders hoch ist.

Es ist außerdem möglich, mehrere Bestrahlungen mit Hilfe von Bestrahlungseinheiten 204 durchzuführen und mehrere Druckschichten 253 aufzubringen. Es sei auch erwähnt, dass es eine vorteilhafte Ausführung dieser Erfindung sein kann, die in der Figur 2 dargestellten Prozessabläufe mehrmals hintereinander und in unterschiedlicher Reihenfolge durchzuführen. Beispielsweise kann auch eine Bestrahlung der unbeschichteten Behälterwand 230 zur Aktivierung vor der Aufbringung der Zwischenschicht 251 erfolgen. Darüber hinaus kann nach Aufbringen der Druckschicht 253 auch eine weitere Zwischenschicht 251 vorgesehen sein. Diese kann entweder als oberste Schicht vorgesehen sein und besonders kratzfest sein, um beispielsweise Beschädigungen des Druckes zu verhindern oder sie kann andere Eigenschaften aufweisen und insbesondere als Zwischenschicht für eine weitere Druckschicht fungieren. Diverse Ausgestaltungen und Prozessabläufe sind daher denkbar.

Da die Zwischenschicht vor allem die Aufgabe erfüllen soll, die Recyclingeigenschaften des bedruckten PET-Behälters zu verbessern, indem die Ablösbarkeit der Druckschicht von der Behälterwand 230 während eines üblichen Recyclingverfahrens erleichtert wird, besteht die Zwischenschicht vorzugsweise aus einem laugenlöslichen bzw. laugenreaktiven oder quellenden Polymer, was sich fest mit der Behälterwand 230 verbindet. Entsprechende geeignete Polymere sind beispielsweise Co-Polymerisate von Methacrylaten, Methacrylsäuren und andere Acrylate und insbesondere die Polymere Polyacrylnitril, Polyacrylate, Polyacrylamide. Weiterhin sind statistische Co-Polymere und Blockpolymere, sowie Terpolymere, die Acrylsäure- oder Methacrylsäuregruppen enthalten, geeignet. Außerdem können Carboxymethylcellulosen oder entsprechende Derivate verwendet werden. Diese sind besonders bevorzugt, da sie als Lebensmittelzusatzstoff zum Einsatz kommen und daher auch als Zwischenschicht auf Verpackungen unbedenklich sind, und weiterhin aus regenerativen Rohstoffen gewonnen und umweltfreundlich abgebaut werden können. Ferner können Maleinsäureanhydrid-Co-Polymere verwendet werden. Diese weisen eine relativ hohe Schmelztemperatur auf, was insbesondere die Einsetzbarkeit der damit beschichteten Behälter im alltäglichen Gebrauch ermöglicht, wohingegen insbesondere bei Schmelztemperaturen oberhalb von 70° Celsius eine Entfernung einer daraus bestehenden Zwischenschicht von der Behälterwand 230 während eines Recyclingprozesses mit warmem Waschwasser möglich ist. Weiterhin ist bevorzugt, dass die Zwischenschicht in basischem Milieu und ggf. oberhalb einer bestimmten Temperatur lösbar ist. Insbesondere bei Temperaturen oberhalb von 70° Celsius und einem pH-Wert von über 10 soll die Zwischenschicht gut von der Behälterwand 230 lösbar sein. Ein in basischem Milieu gut lösliches Polymer ist das BELLAND ® Polymer. Für die Zwecke der Erfindung geeignet wäre beispielsweise auch ein Hydroprimer. Es kann weiterhin bevorzugt sein, leicht basisch vernetzende Beschichtungsmittel auf Acrylatbasis zu verwenden.

Auch Kombinationen der eben genannten Stoffgemische sowie die Einbindung anderer Stoffe sind möglich. Beispielsweise können in die Zwischenschicht photonisch aktive Bestandteile eingebaut werden, die die optischen Eigenschaften der Zwischenschicht verändern können. Weiterhin ist es möglich, Heißleime, die üblicherweise für die Etikettierung von Flaschen verwendet werden, zu nutzen. Auch hier ergibt sich der Vorteil, dass diese relativ hohe Schmelztemperaturen (über 60°C) aufweisen und daher zwar in einem gängigen Recyclingprozess entfernt werden können, bei sonstigem alltäglichen Gebrauch jedoch in fester Form vorliegen. Als Beispiels sei hier der Heißleim "Euromelt 325" erwähnt. Es ist besonders bevorzugt, dass die Zwischenschicht, sobald der Behälter vollständig fertig gestellt ist, Eigenschaften aufweist, die gewährleisten, dass sich die Zwischenschicht mit dem Behälter und der Druckschicht verbindet, wobei diese Verbindung unlöslich in wässrigen Lösungen mit einem pH-Wert zwischen 3 und 10 sein soll.

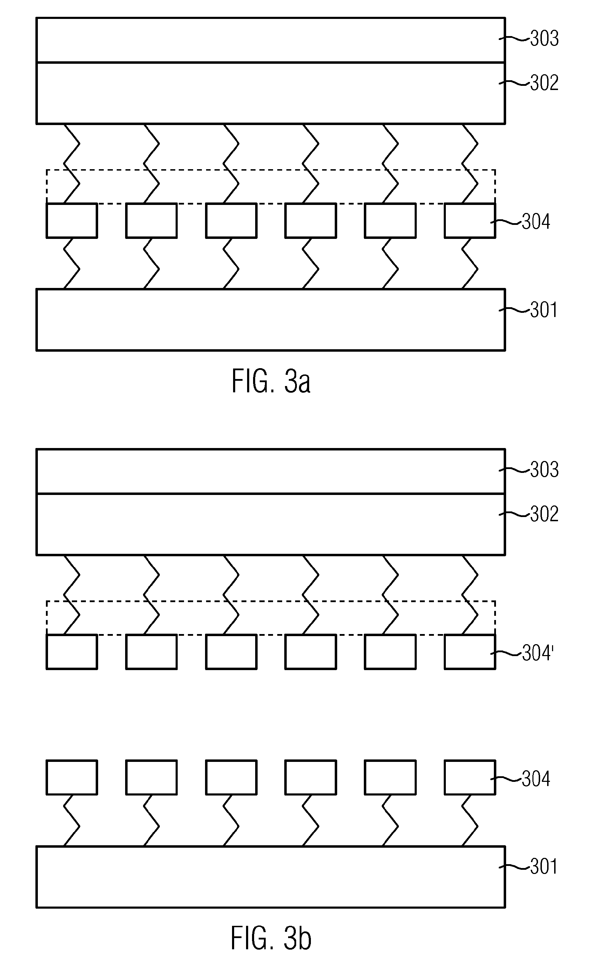

Dazu zeigt Fig. 3 beispielhaft die chemischen Prinzipien.

Um eine Haftung der Zwischenschicht 302 an dem Behälter 301 einerseits und dem Aufdruck 303 andererseits zu gewährleisten, kann beabsichtigt sein, nukleophile Zentren 304 auf der Oberfläche des zu beschichtenden PET-Behälters 301 beispielsweise durch eine basische Beschichtungslösung zu erzeugen. Dabei wird zum einen das PET-Material 301 an der Oberfläche des Behälters mittels alkalischer Esterhydrolyse zumindest teilweise gespalten und so Carboxylatgruppen erzeugt. Mittels der basischen Beschichtungslösung kommt es so zu einer Deprotonierung der ungesättigten Carbonsäuregruppen des PET-Materials an der Oberfläche, wodurch nukleophile Zentren 304 entstehen. Zudem können die an der Oberfläche des PET-Behälters 301 vorhandenen endständige Alkoholgruppen ebenfalls als nukleophile Zentren 304 genutzt werden. Um die Hafteigenschaften der Zwischenschicht 302 weiter positiv zu beeinflussen, können dem PET-Material bei der Herstellung auch weitere Zusätze beigemischt werden. Dazu eignen sich besonders Derivate der Carbonsäure, wie beispielsweise Carbonsäureester, - amid, -halogenid, -chlorid, -salz, -anhydrid, -hydrazid, -azid, Dithiocarbonsäure, Thiocarbonsäure, Peroxycarbonsäure, Diacylperoxid, Hydroxaminsäure, Ketene, Imidocarbonsäure, Imidocarbonsäureester, Amidine, Amidrazone, Orthosäureester oder Nitrile. Diese bilden, wenn sie dem PET-Material bei der Herstellung des Behälters zugesetzt werden, nukleophile Zentren und können so die Bindung zur Zwischenschicht verbessern. Außerdem erweist sich die Verwendung dieser Zusätze als vorteilhaft im Recyclingprozess.

An die so erzeugten nukleophilen Zentren 304 können dann beispielsweise mittels Michael-Addition Acrylatderivate, wie beispielsweise Acrolein, Crotonaldehyd, Acrylnitril, Acrylsäure, Methacrylsäure oder Acrylamid gebunden werden, da es zur Knüpfung einfacher Kohlenstoff-Kohlenstoff-Bindungen kommen kann. Andere Bindungen, die hier ebenfalls entstehen können, sind C-S-, C-O-, C-N-Bindungen, weshalb eine entsprechend nukleophile Oberfläche des PET-Behälters 301 für zahlreiche Stoffe, die als Zwischenschicht 302 verwendet werden können, geeignet ist. Durch die Addition entstehen kovalente Bindungen zwischen PET und Acrylsäurederivaten, die im Weiteren mit den Bestandteilen der Beschichtungslösung polymerisieren können. Die so entstehenden, kovalent gebundenen Acrylatpolymere bilden in Verbindung mit den nukleophilen Zentren 304 die Zwischenschicht 302, auf der dann beispielsweise Tinte 303 aufgebracht werden kann. Besonders bevorzugte Polymere sind hier Polyacrylnitril, Polyacrylate und Polyacrylamide. So entstehen, wie in Fig. 3a dargestellt, Verbindungen zwischen der Zwischenschicht 302 und der Oberfläche des PET-Behälters 301. Die so erzeugte Zwischenschicht bietet insbesondere den Vorteil, dass sie in gängigen wässrigen Lösungen mit pH-Werten zwischen 3 und 10 gar nicht oder nur schwer lösbar ist.

Um diese Zwischenschicht im Rahmen eines Recyclingprozesses von der Oberfläche des PET-Behälters 301 zu lösen, kann bevorzugt die nukleophile Substitution genutzt werden. Der entsprechende Vorgang ist in Fig. 3b dargestellt. Der Recyclingprozess findet üblicherweise in einer stark basischen Lösung, wie beispielsweise NaOH statt. In Lösung liegt dies in Form von *Na⁺*-Ionen und *OH⁻*-Ionen vor. Das Hydroxid-Ion kann die nukleophilen Zentren 304 an der Oberfläche des PET-Behälters 301 substituieren und eine Bindung mit der Zwischenschicht 302 eingehen. Es ersetzt dabei als nukleophiler Anteil 304' die vorherige Verbindung mit den nukleophilen Zentren 304 des PET-Behälters 301. So wird die Verbindung von Zwischenschicht 302 und PET-Oberfläche 301 getrennt und die Zwischenschicht kann von der Oberfläche des PET-Behälters 301 gelöst werden. Das Ablöseverhalten kann durch die Verwendung von Derivaten der Carbonsäure, wie beispielsweise Carbonsäureester, -amid, -halogenid, -chlorid, -salz, - anhydrid, -hydrazid, -azid, Dithiocarbonsäure, Thiocarbonsäure, Peroxycarbonsäure, Diacylperoxid, Hydroxaminsäure, Ketene, Imidocarbonsäure, Imidocarbonsäureester, Amidine, Amidrazone, Orthosäureester oder Nitrile noch verbessert werden, wenn sie dem PET-Material als Additive zugesetzt werden, wenn die Behälter hergestellt werden. Ist die Zwischenschicht 302 mit der darauf befindlichen Tinte 303 abgelöst, kann sie von den in der basischen Lösung enthaltenen Teilen des PET-Behälters getrennt werden.

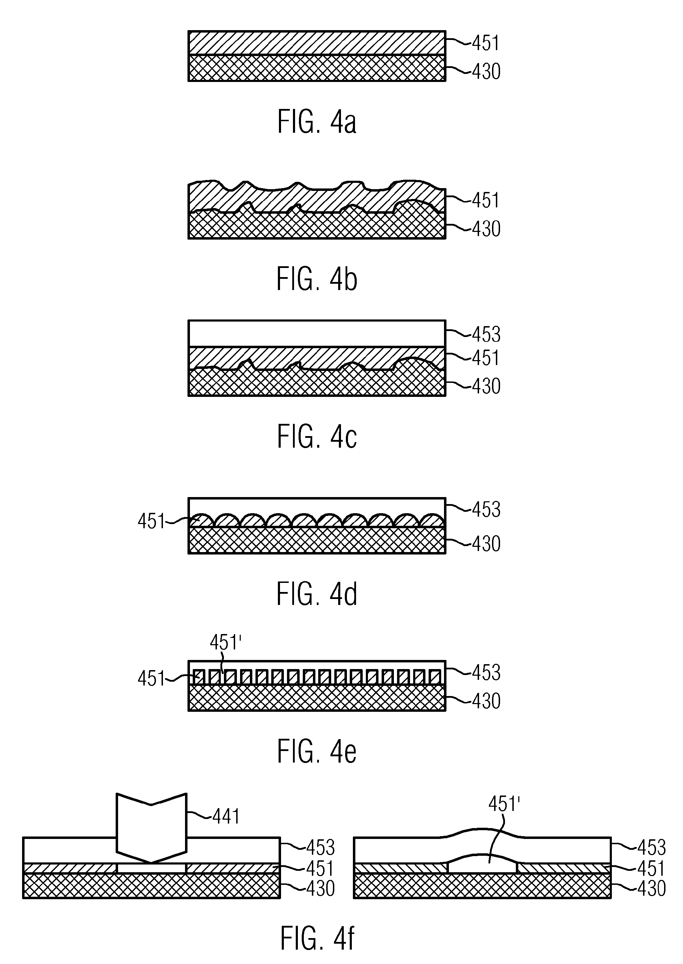

Fig. 4 zeigt unterschiedliche Ausführungsformen der Zwischenschicht. Fig. 4a und Fig. 4b zeigen dabei das Aufbringen einer Zwischenschicht 451 auf eine Behälterwandung 430 bei unterschiedlichen Oberflächenstrukturen der Behälterwandung 430. Ist die Oberfläche der Behälterwandung 430 mikroskopisch gesehen möglichst glatt (Fig. 4a), so kann die Zwischenschicht 451 bei vorzugsweise guter Gleichverteilung auf die Oberfläche des Behälters 430 aufgebracht werden. Sie dient dann vorwiegend dazu, die Haftfestigkeit der Druckschicht an der Zwischenschicht 451 bzw. die Haftung der Zwischenschicht 451 an der Behälteroberfläche 430 separat zu moderieren. Das ist insbesondere in Fällen von Vorteil, in denen die Druckschicht selbst auf der Behälteroberfläche 330 nicht oder nur unzureichend haften würde. Durch Aufbringen einer entsprechenden Zwischenschicht zwischen der Oberfläche des Behälters 430 und der Druckschicht kann so die Haftung verbessert werden.

Selbiges gilt für die in Fig. 4b dargestellte Ausführung. Hier ist die Oberfläche des Behälters 330 mikroskopisch sehr uneben. Es kann hier beabsichtigt sein, diese Unebenheiten ebenfalls über die Zwischenschicht weiterzugeben. Das heißt also, dass die Zwischenschicht im Rahmen einer bestimmten Genauigkeit die Struktur der Oberfläche abbildet. Das kann insbesondere bei einer beabsichtigten Rauhigkeit der Oberfläche auch nach dem Bedrucken, beispielsweise zum Verbessern der Rutschfestigkeit des Behälters von Vorteil sein.

Fig. 4c zeigt eine Behälteroberfläche 430 mit ähnlicher Struktur wie in Fig. 4b. Hier wird die Zwischenschicht jedoch gezielt aufgetragen, um diese Unebenheiten auszugleichen und für das Aufbringen der Druckschicht 453 eine möglichst ebene Fläche zu schaffen. Besonders vorteilhaft ist hier zur Aufbringung der Zwischenschicht 451 beispielsweise die Verwendung von Direktdruckverfahren sowie Flammenpyrolyseverfahren und allen Verfahren, die unabhängig von der Struktur des Substrats (hier die Behälteroberfläche 430) zu einer gleichmäßigen Verteilung auf der Oberfläche der Zwischenschicht 451 führen. Mit der Zwischenschicht können natürlich auch alle im vorhergehenden Teil der Beschreibung beschriebenen Effekte erzielt werden.

Fig. 4d zeigt ein Aufbringen einer Zwischenschicht 451 mit speziellen Eigenschaften. Hier werden regelmäßige Oberflächenstrukturen erzeugt, was wiederum insbesondere mit Direktdruckverfahren sowie Flammenpyrolyseverfahren durchgeführt werden kann. Diese regelmäßige Struktur kann eine Haftung einer Druckschicht 453 erheblich verbessern und kann ebenso bestimmte optische oder haptische Eigenschaften bewirken. So kann durch das Aufbringen einer solchen regelmäßigen Struktur, beispielsweise in Form eines Gitters, ein bestimmter optischer Effekt, beispielsweise Lichtbrechung wie bei Regenbögen, erzielt werden.

Fig. 4e zeigt eine mit der in Fig. 4d dargestellten Ausführung der Zwischenschicht 451 vergleichbare Struktur. Hier wurde eine Zwischenschicht 451 so aufgetragen, dass sich kleinere Kapillaren 451' bilden. Durch die so erzielte Kapillarwirkung kann eine Saugfähigkeit der Oberfläche des Behälters 430 erhöht bzw. unterstützt werden. Die Kapillarwirkung in den Kapillaren 451 bewirkt hier gezielt eine Farbaufnahme der Druckfarbe der Druckschicht 453. In diesem Zusammenhang ist auch eine nicht durchgängige Beschichtung vorteilhaft. Dabei kann die Schicht selektiv unterbrochen sein. Dies kann insbesondere mit pyrolytischen Verfahren erzielt werden. Insbesondere können gezielte Unterbrechungen der Schicht durch selektives bedrucken erreicht werden. Weiterhin können auch bei anderen Beschichtungsverfahren statistisch verteilte Unterbrechungen erzielt werden, beispielsweise bei Verwendung pyrolytischer Verfahren, wobei hier die Behandlung in sehr kurzen Intervallen stattfinden kann, wodurch es zur Bildung von "Keimen" der Beschichtung auf der Oberfläche des Behälters kommen kann, die von einem zum nächsten Behandlungsintervall anwachsen. Durch diese mikroskopisch statistisch verteilten Keime und Unterbrechungen in der Schicht können Kapillarwirkungen und optische Eigenschaften verändert werden.

Figur 4f zeigt eine weitere Ausführung einer Zwischenschicht 451. Hier wird die Zwischenschicht entweder vollständig oder, wie dargestellt, in einem bestimmten Bereich mit Hilfe von Strahlung 441 verändert. Diese Veränderung kann sich nicht nur in beispielsweise optischen oder physikalischen Eigenschaften, wie Farbe oder Rauhigkeit, manifestieren, sondern kann auch zu einem vergrößerten Volumen führen. Das so entstehende vergrößerte Volumen 451' sorgt in diesem ausgewählten Bereich beispielsweise für eine Verringerung der Haftfestigkeit der Druckschicht 453, wodurch beispielsweise ein Abziehen oder Abrubbeln dieser Druckschicht ermöglicht wird und weiterhin haptische Eigenschaften verändert werden können.

Die weiter oben beschriebenen zusätzlichen Eigenschaften der Zwischenschicht können in vorteilhafter Weise durch Verwendung entsprechender Materialien in der Zwischenschicht erreicht werden. Insbesondere erfüllt die Zwischenschicht jedoch die Aufgabe, einerseits die Haftung zwischen der Druckschicht und der Behälterwand zu gewährleisten und ggf. zu verbessern und andererseits ein Ablösen der Druckschicht von der Behälterwand in einem Recyclingprozess, in dem beispielsweise warmes Wasser (üblicherweise Temperaturen von 60°-80° Celsius oder mehr) oder basische Lösungen (hier häufig mit einem pH-Wert über 10 bzw. in einem Bereich über 10) zum Einsatz kommen. Wird die Zwischenschicht aus einem Material gebildet, das eine (deutlich) geringere Dichte oder eine deutlich höhere Dichte als der für die Behälter verwendete Kunststoff hat, kann außerdem in vorteilhafter Weise erreicht werden, dass während des Recyclingprozesses beim Auswaschen der zerkleinerten Behälter in Form von Kunststoffflakes ein Absenken oder ein Aufsteigen der abgelösten Zwischenschicht mit der daran befestigten Druckschicht erfolgt, wodurch diese effektiv von den Kunststoffflakes getrennt werden können, was eine Rückführung des Kunststoffes mit hoher Reinheit ermöglicht.

Es sei an dieser Stelle erwähnt, dass zwar eine Löslichkeit der Zwischenschicht bzw. der Verbindung zwischen Zwischenschicht und Behälterwandung in einer basischen Lösung und/oder bei gegebener Temperatur erreicht werden soll, jedoch eine Unterstützung des Lösungsprozesses der Zwischenschicht auch durch die mechanische Reibung der Kunststoffflakes erreicht wird.

Als Beispiel für Materialien für die Zwischenschicht seien hier insbesondere Acrylatmischungen mit N-Ethyl-2-Pyrrolidon und/oder deren Derivaten genannt. Diese Gemische weisen Viskositäten um 85mPas auf. Bei einer Trocknungszeit von weniger als einer Minute bei 50° C wird hier eine Haftung von 4 bei Anwendung des Gitterschnitts zur Haftmessung erreicht (Skala 0-5, wobei 0 den bestmöglichen Wert angibt). Bei einer Waschlösung mit einem pH-Wert von 3 und bei 25° C kommt es hier nur zu einer teilweisen Ablösung von der Oberfläche eines transparenten PET-Materials. Bei stark basischer Waschlösung und insbesondere in Anwesenheit von NaOH (ph-Wert 13, 2% NaOH und 0,2% Tensid Recyclin, 25° Celsius) löst sich diese Zwischenschicht mit der darauf befindlichen Tinte.

Als weiteres Beispiel sei das eben beschriebene Gemisch mit Zusatz von Acrylamid und/oder entsprechenden Derivaten auf transparenter PET-Oberfläche genannt. Diese Gemische weisen eine Viskosität von 590mPas auf. Bei einer Trocknungszeit von etwa 1 min unter ansonsten gleichen Bedingungen wird ein Kennwert für die Haftung von 1 erzielt. Die Ablöseeigenschaften in saurem und basischem Milieu sind mit obigem Beispiel vergleichbar.

Wird dieses Gemisch zusätzlich um Teflon mit Partikelgrößen zwischen 8µm und 15µm ergänzt, so ergibt sich eine Viskosität von 123mPas, die mit N-Ethyl-2-Pyrrolidon-Dosierung eingestellt werden kann. Bei ansonsten gleichen Bedingungen und insbesondere auf transparentem PET zeigt sich bei einer Trocknungszeit von unter 1 min ebenfalls ein Kennwert von 1 für die Haftung. Weiterhin löst sich die Zwischenschicht mit der Tinte in saurem Milieu nicht, in basischem Milieu hingegen sehr gut.

Für dieselben Gemische ergibt sich bei Verwendung auf weißem PET unter ansonsten gleichen Bedingungen ein Wert der Haftung (Tesa-Test) von 2 bzw. 3 und 1. Alle 3 Gemische lösen sich in basischem Milieu bei 25°C vom PET-Behälter. In saurem Milieu hingegen kommt es beim ersten Gemisch zu einer teilweisen und beim zweiten Gemisch zu einer vollständigen Ablösung. Das dritte Gemisch hingegen löst sich nicht vom Behälter.

Das Recyceln eines so beschichteten Behälters erfolgt daher vorzugsweise in basischem Milieu. Dabei sind insbesondere Recycling-Lösungen mit einem pH-Wert größer als 10 und hier insbesondere solche, die NaOH enthalten, bevorzugt. Für das Recyceln werden die Kunststoffbehälter zunächst zerkleinert, um eine effektive Reinigung und Ablösung der Zwischenschicht mit der Drucktinte zu gewährleisten. Die zerkleinerten Teile des Kunststoffbehälters (auch Kunststoffflakes) werden in einem weiteren Schritt in die basische Recycling-Lösung gegeben, wodurch die Zwischenschicht mit der Drucktinte durch die Recycling-Lösung von den Kunststoffflakes abgelöst wird. Bevorzugt ist hier eine Ablösung mittels nukleophiler Substitution, wie weiter oben beschrieben. Die so von den Kunststoffflakes getrennten Bestandteile der Zwischenschicht mit der Drucktinte können dann, wie in Recyclingverfahren üblich, beispielsweise über Dichteunterschiede verglichen mit den Kunststoffflakes aus der Recycling-Lösung entfernt werden, bzw. in dieser verweilen, wobei dann die Kunststoffflakes aus der Recycling-Lösung zur Weiterverarbeitung abtransportiert werden.

## Patentansprüche

1. Direktdruckverfahren zum Bedrucken von Kunststoffbehältern wie Flaschen mit Hilfe einer Direktdruckmaschine, wobei in einem ersten Schritt eine Zwischenschicht mit Hilfe einer ersten Vorrichtung auf den zu bedruckenden Behälter aufgebracht wird und in einem zweiten Schritt der Behälter in bestimmten Bereichen mit Hilfe einer zweiten Vorrichtung bedruckt wird, **dadurch gekennzeichnet, dass** die Zwischenschicht eine Verbindung mit dem Behälter und der Druckschicht eingeht, die unlöslich in wässrigen Lösungen mit einem pH-Wert zwischen 3 und 10 und gut löslich in wässrigen Lösungen mit einem pH-Wert in einem Bereich kleiner als 3 und/oder größer als 10 ist.

2. Direktdruckverfahren nach Anspruch 1, **dadurch gekennzeichnet, dass** die Zwischenschicht nur in den bestimmten Bereichen auf die Behälter aufgebracht wird.

3. Direktdruckverfahren nach Anspruch 1 oder 2, **dadurch gekennzeichnet, dass** die Zwischenschicht mit Hilfe einer Walzvorrichtung oder einer Sprühvorrichtung oder einer Dipp-Vorrichtung oder einer Direktdruckvorrichtung oder einer Plasmabeschichtungsvorrichtung oder einer Flammenpyrolysevorrichtung auf den Behälter aufgebracht wird.

4. Direktdruckverfahren nach einem der Ansprüche 1 bis 3, **dadurch gekennzeichnet, dass** das Material aus dem die Zwischenschicht besteht ein laugenlösliches Polymer ist oder dieses umfasst und/oder die Zwischenschicht Teflonpartikel enthält, deren Größe zwischen 1µm und 100µm, bevorzugt zwischen 8µm und 15µm beträgt.

5. Direktdruckverfahren nach einem der Ansprüche 1 bis 4, **dadurch gekennzeichnet, dass** das Material aus dem die Zwischenschicht besteht auf Bestrahlung mit Licht einer bestimmten Wellenlänge mit Veränderung wenigstens einer der Eigenschaften Haftfestigkeit, Farbe, Barriereneigenschaften, Migrationseigenschaften, Spreitungseigenschaften reagiert und wobei der Behälter mit Hilfe einer in Transportrichtung nach der ersten Vorrichtung und vor der zweiten Vorrichtung angeordneten Lichtquelle mit Licht dieser bestimmten Wellenlänge bestrahlt wird.

6. Direktdruckverfahren nach einem der Ansprüche 1 bis 5, **dadurch gekennzeichnet, dass** die Zwischenschicht derart auf dem Behälter aufgebracht wird, dass die resultierende Rauhigkeit der Oberfläche des Behälters in den bestimmten Bereichen erhöht oder verringert wird oder dass Muster in den bestimmten Bereichen erzeugt werden.

7. Direktdruckverfahren nach einem der Ansprüche 1 bis 6, **dadurch gekennzeichnet, dass** die Schmelztemperatur des Materials aus dem die Zwischenschicht besteht 70°C oder mehr beträgt und/oder dass die Oberflächenenergie des mit der Zwischenschicht beschichteten Kunststoffbehälters zwischen 30mN/m und 60mN/m, bevorzugt zwischen 38mN/m und 46mN/m beträgt.

8. Direktdruckverfahren nach einem der Ansprüche 1 bis 7, **dadurch gekennzeichnet, dass** die Zwischenschicht unlöslich in wässrigen Tensidlösungen sowie in Ethanol und Isopropanol ist.

9. Direktdruckverfahren nach einem der Ansprüche 1 bis 8, **dadurch gekennzeichnet, dass** die Viskosität eines Stoffgemisches aus dem die Zwischenschicht besteht zwischen 80mPas und 600mPas beträgt.

10. Direktdruckmaschine zum Bedrucken von Kunststoffbehältern wie Flaschen, wobei die Direktdruckmaschine eine Transportvorrichtung zum Befördern der Behälter durch die Druckmaschine entlang einer Transportrichtung, eine erste Vorrichtung zum Aufbringen einer Zwischenschicht und eine zweite Vorrichtung zum Bedrucken von bestimmten Bereichen der Behälter mit einer Druckschicht umfasst, wobei die erste Vorrichtung in Transportrichtung vor der zweiten Vorrichtung angeordnet ist, **dadurch gekennzeichnet, dass** die Direktdruckmaschine zur Durchführung des Direktdruckverfahrens nach einem der Ansprüche 1 bis 9 geeignet ist.

11. Direktdruckmaschine nach Anspruch 10, **dadurch gekennzeichnet, dass** die erste Vorrichtung eine Walzvorrichtung oder eine Sprühvorrichtung oder eine Dipp-Vorrichtung oder eine Direktdruckvorrichtung oder eine Plasmabeschichtungsvorrichtung oder eine Flammenpyrolysevorrichtung, umfasst, die die Zwischenschicht aufbringen können.

12. Direktdruckmaschine nach Anspruch 10 oder 11, **dadurch gekennzeichnet, dass** das Material aus dem die Zwischenschicht besteht ein laugenlösliches Polymer ist oder dieses umfasst und/oder die Zwischenschicht Teflonpartikel enthält, deren Größe zwischen 1µm und 100µm, bevorzugt zwischen 8µm und 15µm beträgt.

13. Direktdruckmaschine nach einem der Ansprüche 10 bis 12, **dadurch gekennzeichnet, dass** die Direktdruckmaschine eine Lichtquelle in Transportrichtung nach der ersten Vorrichtung und vor der zweiten Vorrichtung umfasst, wobei die Lichtquelle Licht in einem bestimmten Wellenlängenbereich emittieren kann und wobei das Material, aus dem die Zwischenschicht besteht, auf eine Bestrahlung mit Licht in diesem bestimmten Wellenlängenbereich reagiert.

14. Recyclingverfahren für Kunststoffbehälter, insbesondere PET-Behälter, mit einer Zwischenschicht, die mit dem Kunststoffbehälter und einer Druckschicht verbunden ist, wobei die Zwischenschicht unlöslich in wässrigen Lösungen mit einem pH-Wert zwischen 3 und 10 und gut löslich in wässrigen Lösungen mit einem pH-Wert in einem Bereich größer als 10 ist, **dadurch gekennzeichnet, dass** der Kunststoffbehälter zerkleinert wird und eine Ablösung der Kunststoffschicht vom zerkleinerten Kunststoffbehälter mittels nukleophiler Substitution erfolgt.

15. Recyclingverfahren nach Anspruch 14, **dadurch gekennzeichnet, dass** die Ablösung der Kunststoffschicht in einer Recyclinglösung mit einem pH-Wert größer als 10 erfolgt, wobei die Recycling-Lösung NaOH enthält.
